# EUROPEAN PATENT APPLICATION

(11) **EP 4 606 607 A1**
(43) Date of publication of application: **27.08.2025**
(21) Application number: 25158749.9
(22) Date of filing: 19.02.2025
(51) Int. Cl.: B60H 1/00

(54) **HVAC BOX FOR COOLING COMPONENTS OF A VEHICLE**

(30) Priority: 19.02.2024 EP 24158420
(71) Applicant: TI Automotive Technology Center GmbH, 76437 Rastatt (DE)
(72) Inventor: BRIXNER, Sebastian, 76437 Rastatt (DE)
(74) Representative: dompatent von Kreisler Selting Werner - Partnerschaft von Patent- und Rechtsanwälten mbB

(57) **Abstract**

The invention relates to a HVAC Box (10) for cooling components of a vehicle with a coolant, the HVAC Box (10) comprising:
a box (12) with integrated coolant pipes (14a - 14d),
a first mounting flange (16) for a coolant pump (18),
a second mounting flange (20) for a coolant valve (22)
whereby the first and second mounting flanges (16, 20) are connected with at least one coolant pipe (14a - 14d).

## Description

The invention relates to a HVAC Box for conditioning the cabin and cooling components of a vehicle, in particular an electric vehicle.

In the related art the HVAC box is arranged close to the bulkhead outside the cabin. The HVAC box has to be arranged close to the air outlets by which heated or cooled air is conducted to the cabin of the car. In modern cars this space is needed for other components such as components for autonomous driving and head up displays.

Therefore, there is a need to move thermal components of a car to another place and to enable arrangement of these components in a more flexible manner.

This object is achieved by the features of claim 1.

The inventive HVAC Box serves at the same time as a classical HVAC box, preferably according to the definition below, and for cooling components of a vehicle, in particular an electric vehicle with a coolant. The HVAC Box comprises: a box, in particular a plastic box with integrated coolant pipes, a first mounting flange for a coolant pump and a second mounting flange for a coolant valve. The first and second mounting flange are connected with at least one coolant pipe.

The inventive HVAC Box has the advantage that it serves for conducting air while at the same time it provides a mounting flange for a coolant pump and a mounting flange for a coolant valve. Therefore, all these components can be arranged in a very compact manner on the HVAC Box. Further this HVAC box can be arranged in a very flexible manner inside the vehicle and therefore, can be moved away from the bulkhead of the vehicle where other components such as a head up display or components for autonomous driving can be arranged instead. Considering a conditioning of the cabin via the vehicle ceiling and/or floor instead of via dashboard nozzles, as it would be applied in autonomous driving vehicles for the case that the front passengers are facing the rear passengers, the HVAC Box can be relocated and merged with the thermal management system of the vehicle, making valuable space near the bulkhead.

An HVAC box in a car, also known as the HVAC module or heater box, is a component of the vehicle's Heating, Ventilation, and Air Conditioning (HVAC) system. It serves for regulating and directing airflow, temperature, and air distribution within the cabin.

The HVAC box may house essential components such as the heater core, evaporator, blower motor, blend doors, and/or actuators. It preferably controls the mixing of hot and cold air, adjusts airflow direction (defrost, floor, face vents), and/or ensures proper climate control based on user settings. The system works by drawing air from outside or inside the vehicle, conditioning it (heating or cooling), and then distributing it through ducts to the cabin.

It is preferred that a heat exchanger is attached to the HVAC Box.

It is further preferred that the coolant pipes are integrally formed in the HVAC Box by blow molding or injection molding.

In a further preferred embodiment the inventive apparatus comprises a second heat exchanger, which is tilted relative to the first heat exchanger. In other words the two heat exchangers are not arranged parallel to each other.

It is preferred that the first heat exchanger is adapted to transfer heat between the coolant and air, whereby this air is distributed by airducts which are attached to the heat exchanger.

It is further preferred that the second heat exchanger is adapted to transfer heat between the refrigerant and/or coolant and air.

The inventive apparatus may further comprise a refrigerant module attached to the HVAC Box, whereby a chiller is attached to the HVAC Box for exchanging heat between the refrigerant and the coolant.

The refrigerant module manages the functions of air conditioning, drying and heat pump by controlling refrigerant flow and pressure to the HVAC refrigerant-air heat exchangers (evaporator, condenser/gas cooler) as well as to the attached refrigerant-coolant heat exchangers (chiller, liquid cooled condenser), for battery conditioning or heat harvesting. The module comprises flow channels embedded in an aluminum module as well as valves, sensors, filling ports and interfaces to lines and heat exchangers.

The refrigerant module can be embedded into the integrated HVAC Box or attached to it via interfaces at the commonly shared components, such as the first or second heat exchanger or the refrigerant-coolant heat exchanger (chiller, liquid cooled condenser).

The refrigerant-coolant heat exchangers comprise flow connections to the coolant as well as to the refrigerant module or equivalent piping, while allowing large heat transfer between both fluids by providing a large surface area, e.g. as a stack of brazed plates.

It is further preferred that the pipes of the chiller, in which the coolant flows, are integrally formed in the HVAC Box.

It is further preferred that the airducts, which are used to distribute the air coming from the first heat exchanger, are arranged in the A, B and/or C pillars of the vehicle and/or in the vehicle roof.

It is further preferred that at least a part of the airducts is insulated. Hereby, thermal losses can be minimised so that the airducts can be longer without wasting to much heat.

The following figures describe preferred embodiments of the present invention:

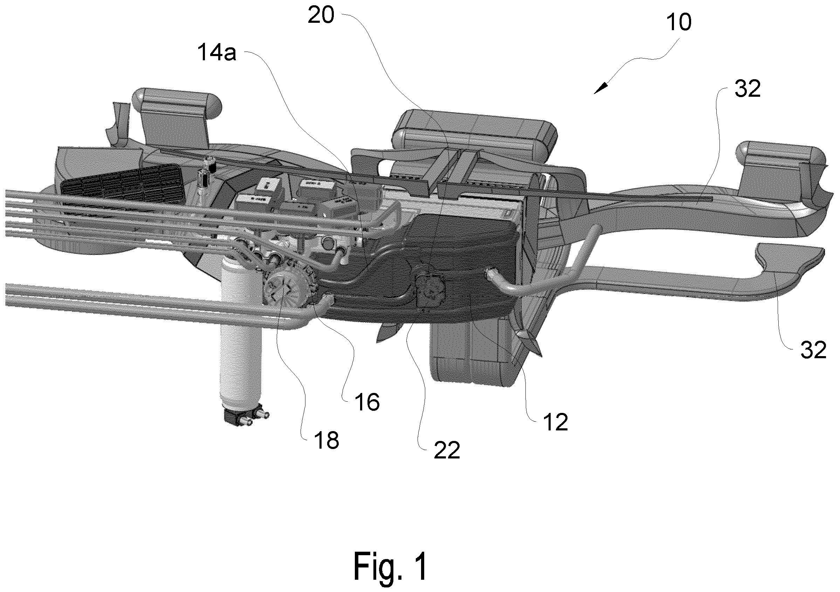

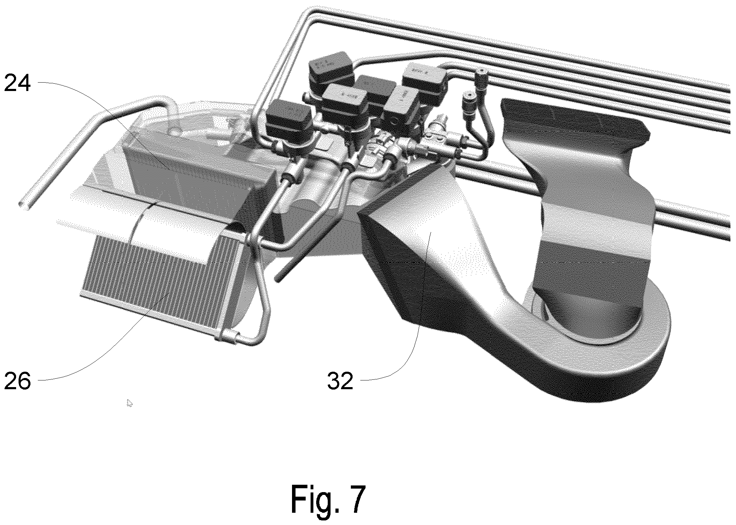

Figures 1 - 7 show an embodiment of the present invention from different perspectives.

Figure 1 shows the inventive HVAC Box 10 for cooling components of a vehicle, in particular an electric vehicle, with a coolant, while at the same time it serves as a classical HVAC box according to the functions described above. The HVAC Box 10 comprises a plastic box 12 with integrated coolant pipes 14a. These can be for example blow moulded and therefore, be integrally formed in the plastic box 12. The plastic box 12 comprises a first mounting flange 16 for a coolant pump 18 and a second mounting flange 20 for a coolant valve 22. The coolant pump is used for pumping the coolant to other components of the vehicle. The coolant valve is used for facilitating the distribution of the coolant inside the vehicle.

The first and second mounting flanges 16, 20 are connected with at least one coolant pipe 14a - 14d, which is integrally formed in the plastic box 12.

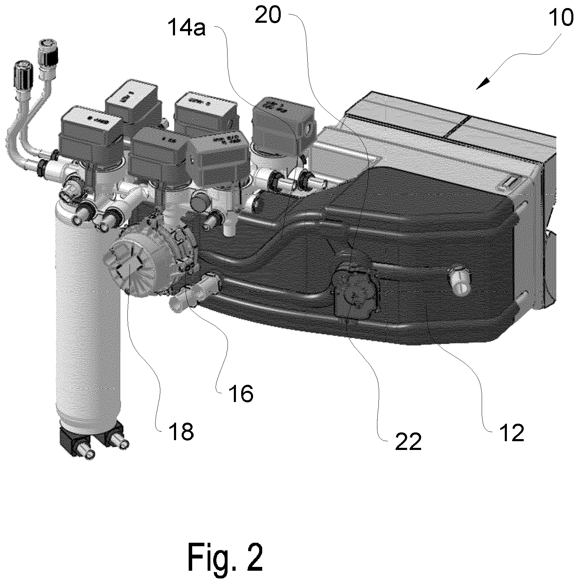

The HVAC Box 10 is shown in an isolated view in figure 2 whereas figure 1 shows the HVAC Box together with other components, e.g. airducts 32.

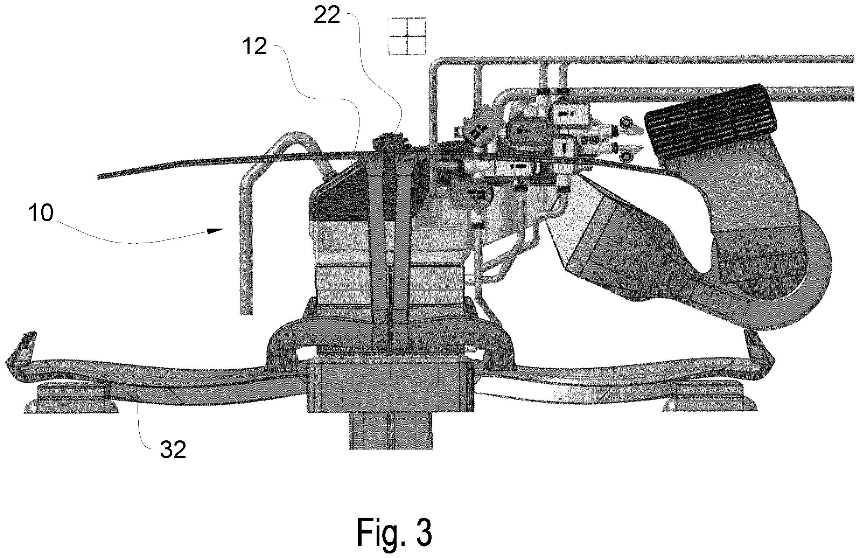

Figure 3 shows the HVAC Box 10 of figure 1 from above. In particular it can be seen how the air coming from the first heat exchanger 24 is distributed via airducts 32.

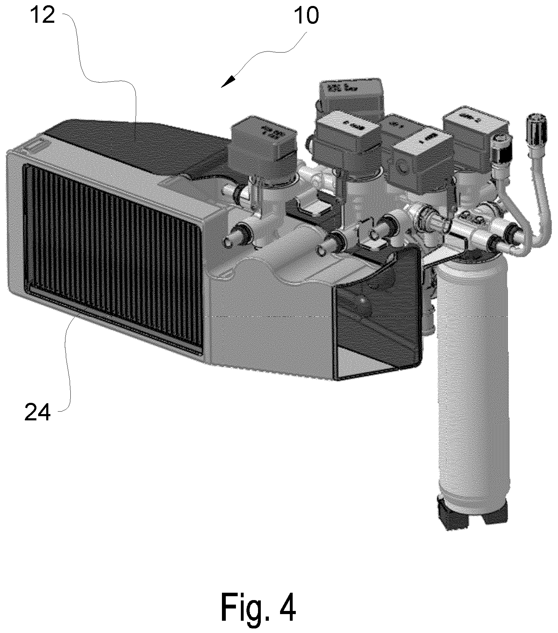

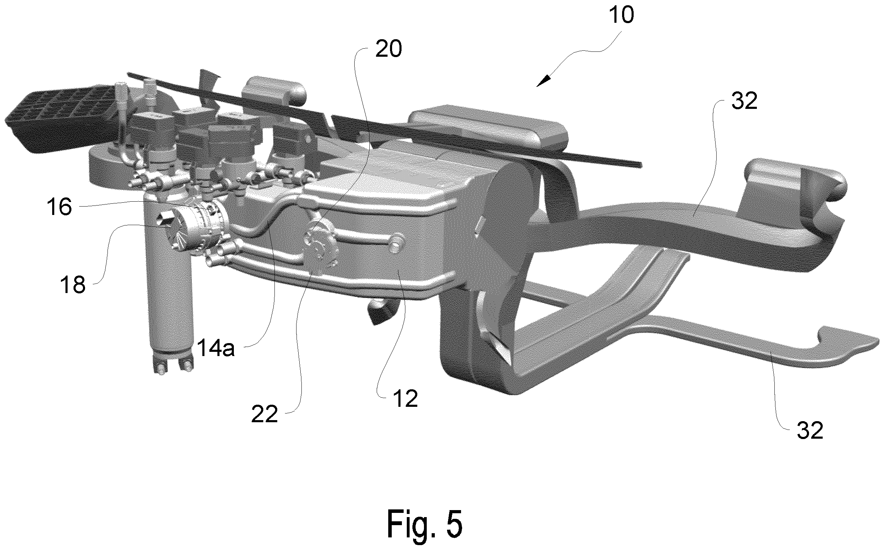

This first heat exchanger 24 is shown in figure 4. The airducts are also shown in figure 5.

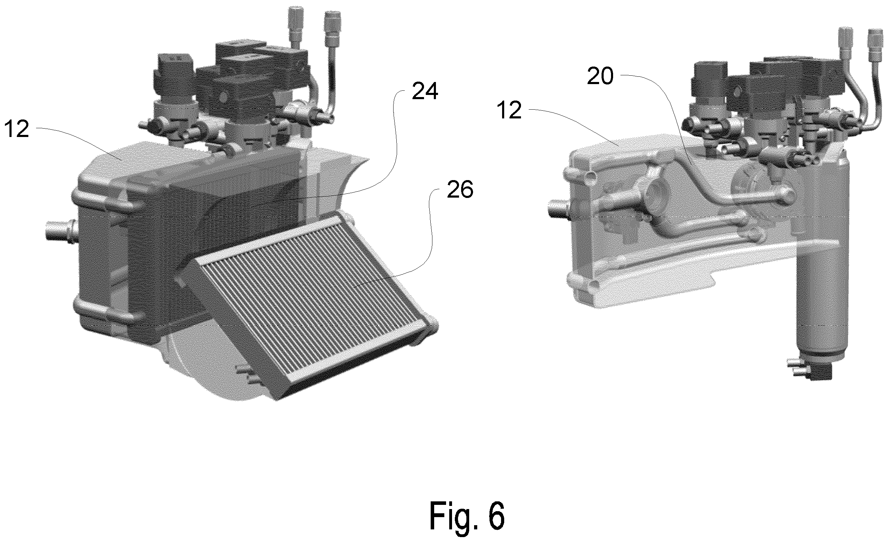

Figure 6 shows the first heat exchanger 24 and the second heat exchanger 26, which is tilted relative to the first heat exchanger 24. The first heat exchanger 24 is adapted to transfer heat between the coolant and air, whereby this air is distributed by air ducts 32 which are attached to the heat exchanger (see e.g. figure 5). The second heat exchanger 26 is adapted to transfer heat between the refrigerant and air.

The function of the system components is as follows:
pT Sensors are used to measure the pressure and / or temperature inside the fluid.

They are used in coolant and refrigerant circuits.

Valves are used to distribute the flow between various channels or precisely control the mass flow rate or pressure in each flow path. Various types can be used in the coolant and refrigerant circuits.

The accumulator stores liquid refrigerant, separates gas and liquid phase, ensures oil return to the compressor and extracts moisture out of the system.

The internal heat exchanger (embedded in accumulator) exchanges heat between liquid and suction line of the refrigerant system to increase system efficiency.

The invention is further related to a cooling module for cooling components of a vehicle as described in the following aspects below. Here the cooling module is equivalent to the HVAC box as described in the specification above and may comprise identical features:

### Aspects

Aspect 1. Cooling module (10) for cooling components of an vehicle with a coolant, the cooling module (10) comprising:
a box (12) with integrated coolant pipes (14a - 14d),
a first mounting flange (16) for a coolant pump (18),
a second mounting flange (20) for a coolant valve (22)
whereby the first and second mounting flanges (16, 20) are connected with at least one coolant pipe (14a - 14d).

Aspect 2. Apparatus according to aspect 1, characterized in that, a heat exchanger (24) is a attached to the cooling module (10).

Aspect 3. Apparatus according to aspect 1 or 2, characterized in that, the coolant pipes (14a - 14d) are integrally formed in the cooling module (10) by blow moulding.

Aspect 4. Apparatus according to aspect 2, characterized by a second heat exchanger (26) tilted relative to the first heat exchanger (24) so that the two heat exchangers (24, 26) are not arranged parallel to each other.

Aspect 5. Apparatus according to any preceding aspect, characterized by a refrigerant module (28) attached to the cooling module (10), whereby a chiller (30) is attached to the cooling module (10) for exchanging heat between the refrigerant and the coolant.

Aspect 6. Apparatus according to aspect 5, characterized in that, the pipes of the chiller (30) to which the coolant flows are integrally formed in the cooling module (10).

Aspect 7. Apparatus according to aspect 2, characterized in that the heat exchanger (24) is adapted to transfer heat between the coolant and air, whereby this air is distributed by air ducts (32), which are attached to the heat exchanger (24).

Aspect 8. Apparatus according to aspect 4 and 5, characterized in that, the second heat exchanger (26) is adapted to transfer heat between the refrigerant and air.

Aspect 9. Apparatus according to aspect 7, characterized in that, the air ducts are arranged in the A, B and/or C-pillars of the vehicle and/or in the vehicle roof.

Aspect 10. Apparatus according to aspect 9, characterized in that, at least a part of the air ducts is insulated.

## Claims

1. HVAC Box (10) for cooling components of a vehicle with a coolant and/or refrigerant, the HVAC Box (10) comprising:
a box (12) with integrated coolant pipes (14a - 14d),
a first mounting flange (16) for a coolant pump (18),
a second mounting flange (20) for a coolant valve (22)
whereby the first and second mounting flanges (16, 20) are connected with at least one coolant pipe (14a - 14d).

2. Apparatus according to claim 1, **characterized in that**, a heat exchanger (24) is a attached to the HVAC Box (10).

3. Apparatus according to claim 1 or 2, **characterized in that**, the coolant pipes (14a - 14d) are integrally formed in the HVAC Box (10) by blow moulding and or injection molding.

4. Apparatus according to claim 2, **characterized by** a second heat exchanger (26) tilted relative to the first heat exchanger (24) so that the two heat exchangers (24, 26) are not arranged parallel to each other.

5. Apparatus according to any preceding claim, **characterized by** a refrigerant module (28) attached to the HVAC Box (10), whereby a chiller (30) is attached to the HVAC Box (10) for exchanging heat between the refrigerant and the coolant.

6. Apparatus according to claim 5, **characterized in that**, the pipes of the chiller (30) to which the coolant flows are integrally formed in the HVAC Box (10).

7. Apparatus according to claim 2, **characterized in that** the heat exchanger (24) is adapted to transfer heat between the coolant and air, whereby this air is distributed by air ducts (32), which are attached to the heat exchanger (24).

8. Apparatus according to claim 4 and 5, **characterized in that**, the second heat exchanger (26) is adapted to transfer heat between the refrigerant and air.

9. Apparatus according to claim 7, **characterized in that**, the air ducts are arranged in the A, B and/or C-pillars of the vehicle and/or in the vehicle roof.

10. Apparatus according to claim 9, **characterized in that**, at least a part of the air ducts is insulated.
